(19) **Europäisches Patentamt**
**European Patent Office**
**Office européen des brevets**

(11) **EP 2 154 829 A1**

(12) **EUROPEAN PATENT APPLICATION**

(43) Date of publication:
**17.02.2010 Bulletin 2010/07**

(51) Int Cl.:
**H04L 12/28** (2006.01)     **H04L 1/00** (2006.01)

(21) Application number: **08305482.5**

(22) Date of filing: **15.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Thomson Licensing**
**92443 Issy-les-Moulineaux Cedex (FR)**

(72) Inventors:
• **Schemmann, Heinrich**
**78052 Villingen-Schwenningen (DE)**
• **Zhang, Zhi Gang**
**HaiDian District,**
**Beijing (CN)**
• **Yu, Jin Fei**
**Hai Dian District,**
**Beijing (CN)**

• **Schäferjohann, Volker**
**30890 Barsinghausen (DE)**

(74) Representative: **Rittner, Karsten et al**
**Deutsche Thomson OHG**
**European Patent Operations**
**Karl-Wiechert-Allee 74**
**30625 Hannover (DE)**

Remarks:
•A request for correction of the claims has been filed pursuant to Rule 139 EPC. A decision on the request will be taken during the proceedings before the Examining Division (Guidelines for Examination in the EPO, A-V, 3.).
•Amended claims in accordance with Rule 137(2) EPC.

(54) **Method for the adjustment of a transmission characteristic for a data transfer in a network of stations and first and second network station for the use in said method**

(57)     The invention relates to a method for adapting a transmission characteristic for a data transfer between two stations (AP1, AP2; CLI1, CLI2) over an RF cable (50). The RF cable (50) has a first frequency band for a plurality of TV channels and another frequency band for providing a number of data channels to the stations in the network. For adjustment of the transmission characteristic a first station (AP1, AP2) will transmit at a first defined transmission characteristic. This value is known to the stations (CLI1, CLI2) to which the transmission is directed. The receiving station (CLI1, CLI2) measures the actual transmission characteristic of the data signal reception and calculates the path loss based on the first defined transmission characteristic and the actual measured characteristic. From that it will determine the appropriate adjusted transmission characteristic for its own transmissions back to the first station (AP1, AP2) based on the calculated path loss.

Fig. 4

**Description**

The invention relates to a method for adjusting a transmission characteristic for a sending station in a network of stations. The invention also relates to correspondingly adapted first and second network stations. More particularly, the invention relates to in house data communication over a broadband cable, e.g. a TV coax cable.

Background to the invention

Cable TV systems also called "Community Antenna TV" systems (CATV) are known. For distribution of analog and/or digital TV signals the well known coax cables are used since long in houses and flats. With the cable's broadband characteristic a high number of TV and radio programs can be distributed to a plurality of stations. Meanwhile, the cable distribution system has become popular for further providing data services to the stations in the network. Internet service is important and systems have been developed for transferring IP data packets over the TV cable.

The "Data Over Cable Service Internet Specifications" (DOCSIS) is one standard which is developed and widely adopted in North America and partly in Europe, in which a type of dedicated cable modem (CM) is used at the client ends, and a cable modem termination system (CMTS) is employed at the server ends. Meanwhile, along with the rapid development of the home network technology, other kinds of cable home networks are also developed, which utilize the coaxial cable of the CATV network, for example, MoCA (Multimedia over COAX Alliance), HCNA (Home Cable Network Access), etc.

On the other hand, thanks to the success of wireless local area network technology WLAN, where the cost of WLAN compliant hardware and software is reduced a lot, another access technology in the hybrid fiber coaxial cable network is based on WLAN technology for the distribution in the home.

This system is called "Asymmetric Data Over Coax" (ADOC) and is currently being designed in China to install Internet access in big houses with a great number of apartments. The system for in house data communication is using the existing coax TV cabling for transferring the data signals. Internet services are provided in parallel to the existing analog or digital TV service to the users. The data service uses an RF spectrum above the TV spectrum (> 862 MHz), in a frequency region between 900 and 1200 MHz.

The basic concept is described in the Chinese patent application CN200610140627.2 of the applicant. A head-end is installed in a house and is connected with a telecommunication line, e.g. an optical fiber cable or copper cable over which Digital Subscriber Line (DSL) signals are transported. The head-end is equipped with a number of WLAN access points (AP). Each WLAN AP supplies a number of dependent stations - usually called "clients" - with a data service. The WLAN RF signal in 2.4 or 5 GHz band is frequency converted to the upper end of the cable's frequency spectrum, e.g. in frequency range 900 - 1200 MHz. The focus of the patent application is on the general system architecture and certain aspects like time division and synchronization or load management and balance.

Goal and present understanding is that the ADOC system is from hardware and software point of view as much as possible system compliant with the IEEE 802.11 a,h set of standards, i.e. the WLAN standards. Of course with some additional restrictions or modifications:

The system is working in infrastructure mode meaning that several clients (CLI) and one shared AP operate on one RF channel. All accesses are between the AP and clients, there is no direct communication between clients CLI1, CLI2.

With no need for backwards compatibility with old WLAN systems, ADOC must not support non-OFDM modulation schemes or other legacy technologies, e.g. "802.11b" modes.

For communication over the TV cable, the major hardware modification is the change of channel frequencies from the 2.4 GHz or 5 GHz band to the 900 MHz band, in order to overcome excessive cable network losses at higher frequencies.

Further modifications foreseeable are at MAC and higher protocol levels, preferably to be implemented in software.

Invention

The use of multiple RF channels in data over TV cable systems is desirable and has become part of the ADOC system architecture. Due to restricted selectivity of typical WLAN radio components, still interference cases can occur, which cause loss of data packets and limit the total throughput. Note that the clients located in different flats are distributed along the coax cable and have different distances to the access points in the head-end. Therefore the transmissions from the different clients encounter different signal attenuations until they get to the access points.

It is an object of the invention to enhance the reliability of operation for the multi channel system on cable. This object is equivalent to the object of the invention to allow a higher overall data rate in a data cable network.

A transmit power control strategy is proposed according to the invention for overcoming the drawbacks related with the different signal attenuations. According to a first embodiment of the invention the access point AP first transmits at a default transmission characteristic which is known to the clients. (It is either communicated to the clients beforehand or it is a fixed valued programmed inside the client's hardware or software). The clients measure the actual transmission characteristic of the data signal reception and calculate a path loss based on the known value and the actually measured value. They determine an appropriate adapted transmission characteristic for their own transmissions back to the access point AP and will use the adapted value when they transmit. These adaptations aim to improve the signal receiving conditions at the access point during reception.

A method according to the invention is disclosed in the independent claim 1. Corresponding adapted network stations to be used in the method according the invention are disclosed in claims 9 and 14.

The transmission characteristic can be one of or a combination of the transmit power level, the modulation type and the level of error protection for the data transfer.

When the transmission characteristic is the transmit power level, the following solution is proposed:

The transmit power control is implemented in all client modems. The control strategy is to get the same signal levels during reception at the access points in the head-end, independent from which client the signal is sent. Each client will have to set it's transmit power level individually, according to the different attenuations of the different cable paths to the access points AP.

The power control strategy implies, that client modems close to the head-end installation only require a low transmit power. This allows for a lower cost implementation for a part of the Client modems.

All RF receivers need to have selectivity such, that the successful reception of one channel out of a set of channels is possible. The channels shall have about equal levels and be equally spaced in the spectrum.

Another advantage of the method according to the invention is that it maintains a higher data throughput. Further, radio emissions from the network are reduced.

With the use of the WLAN technology the system benefits from existing low cost IC sets and software stacks.

More advantages from the transmission characteristic control strategy are:

• Scalability for different installations of TV in-house cabling.

• Flexibility to make different service offerings with optimum performance/price/cost.

• Installations are stepwise upgradeable.

• Upgraded equipment is backwards compatible with the installed base.

• Hot-swap upgrade possible - no system down-time or disturbance of operation.

• All equipment can be based on the same standard components (here 802.11 WLAN chipsets). No special version of IC for some high rate installations. Just use multiple standard modems.

• Fast reaction time & flexibility to cope with growing demand for data rate.

• The solution is solely located inside each Client CLI. The feature is fully backward compatible and transparent. Even when a new CLI with this feature is introduced to an existing installation, operation without any disadvantage is given. Other system components (AP, other client) don't need to be changed immediately.

• Even a rudimentary implementation in some clients will improve throughput and reduce system power dissipation.

• The solution does not require the changing of access point firmware or extensions to the communication protocols, since there is no need for coordination between network clients.

Measuring the characteristic of data signal reception from the access point can be advantageously performed during reception of the beacon packets. The signal may be more stable than in other data frames. The beacon is about the same frame, in terms of Tx power, modulation scheme, code rate, duration, majority of information content, etc. Also, since all clients will use this as a reference, it is recommended to use it for the measurements.

The following methods will accelerate the process to connect a client, e.g. when it is switched on. Before joining the network, the client CLI can listen to the ongoing communication and choose already its appropriate transmission characteristic. The first data transmitted come already with a good level and have low probability to be lost.

A further enhancement is achieved, if a client CLI stores its last used transmit characteristic. When reconnecting, this last setting can then be reused to start with. If the transmission is not successful, the method with the measuring of the actual reception signal has to be taken again.

Both methods will be beneficial, especially for networks with many clients, which join or leave frequently. The total data traffic will not be slowed down by too many iterative adjustments experiments.

The tolerance of power control is according to the precision, which each client has to measure it's receive signal power. The WLAN specification IEEE 802.11h mentions a maximum error of +-5dB. This may be too large in a cable transmission system like ADOC. This means a more precise hardware or a calibration of the modems is desirable. The use of equal hardware for all clients reduces the precision question to a component matching issue.

The method uses the fact, that the attenuation of all network paths is usually not dependent on the direction of signal flow. This is correct for pure passive networks. However in installations with repeaters, bridges, etc., additional considerations may be required. This could introduce some additional tolerance, or the clients would need to get knowledge, if the repeater etc. is asymmetric in direction for its transmission characteristics.

The dependent claims contain advantageous developments and improvements to the method and devices according to the invention.

Drawings

Exemplary embodiments of the invention are shown in the drawings and are explained in greater detail in the following description.

In the drawings:

Fig. 1    shows the principle system architecture of the ADOC system according to the invention;

Fig. 2    shows an example for assignments of access points to clients in the cable network according to the invention;

Fig. 3    illustrates transmissions from two access points to the clients in the cable network and illustrates the near-far problem of transmissions from individual clients to an access point;

Fig. 4    shows the simultaneous transmissions of two clients in different distances to the access points making use of the transmit power control process according to the invention;

Fig. 5    shows a 1st flow chart for the transmit power determination in a client of the cable network, and;

Fig. 6    shows a 2nd flow chart for the transmit power control process according to the invention.

Exemplary embodiments of the invention

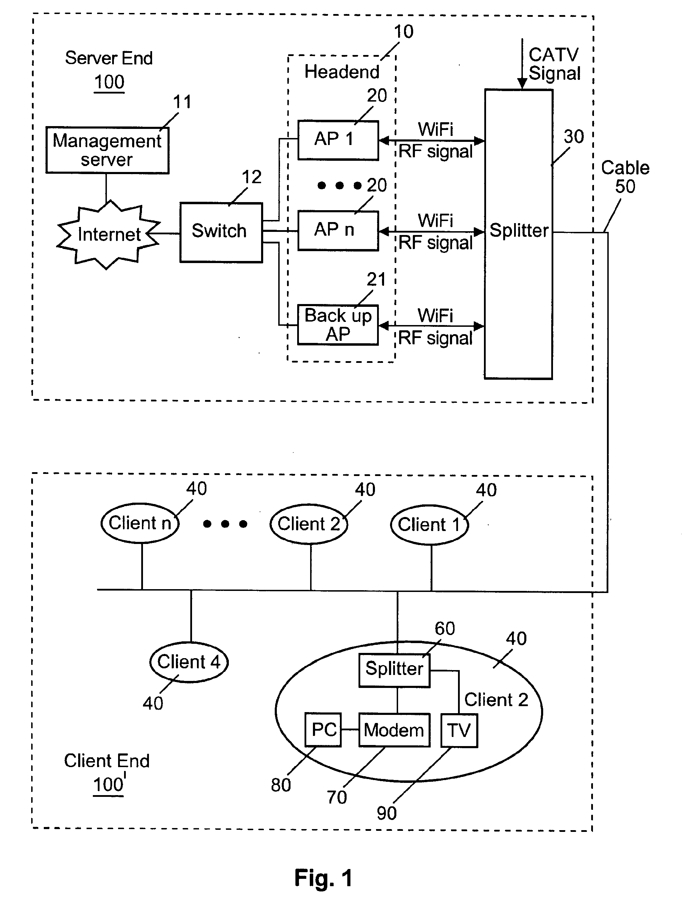

The system architecture of the ADOC system is shown in Fig. 1. The system architecture is already known from the patent application CN200610140627.2 of the applicant. It is therefore expressively referred to the above mentioned Chinese patent application for the purpose of sufficiently disclosing the invention, too.

In Fig.1 an embodiment is illustrated, showing a system infrastructure for access to the internet through an existing CATV cable network in a house. The house is considered to be a big house with a plurality of apartments. The house has internet access, e.g. over an optical fiber or copper cable over which data is transported according to the Ethernet bus technology, e.g. 1 GBitE or 100 MBitE or with Digital Subscriber Line DSL technology. At the server end of the system as shown by reference sign 100, during the downlink transmission (from the server end 100 to the client end 100'), a head-end apparatus 10 is provided between the wide area network WAN and the CATV network. Said head-end apparatus 10 comprises multiple access points 20 (AP1...APn). The access points 20 are used to convert the Ethernet network signal received via a switch 12 into WLAN RF signals. The WLAN RF signals from the multiple access points 20 are combined together with the CATV signal in a splitter 30. Here, the splitter 30 represents a set of power splitters and band splitters. The splitter 30 is connected to a cable 50. The cable is for distributing TV programs and Internet service to the clients in the flats. The APs 20 in the embodiment provide data switching function over the Data Link Layer of the OSI (Open System Interconnect) reference model. As shown in the Fig.1, each client 40, for example client 2, at the remote client end 100' of the CATV network, is provided with a splitter 60 for separating a data channel RF signal from the analog or digital TV channels of the CATV system, and for feeding the data channel signals to modem 70 and the TV signal to TV receiver 90 at client 2 respectively. Here, the splitter 60 can be replaced by power splitters and/or band pass filters. Finally, the data signal is demodulated by the modem 70 and forwarded to a personal computer PC 80 at client 2. In this embodiment, client 2 is used just for explanation. The arrangement of splitter, modem and devices in the other clients 40 at the client end 100' may be basically the same.

During the uplink transmission (from the client end 100' to the server end 100), a data signal from the PC 80 at client 2 is first translated by modem 70 into a WLAN RF signal and then converted into the 900 MHz band by the splitter 60 for the transport over the cable 50. Finally the converted WLAN RF signal is converted by the associated access point 20 in the head-end 10 into an Ethernet signal and sent to the Ethernet network via the Ethernet switch 12. In case of using modems based on standard WLAN components operating at 2.4 GHz, a wide band frequency converter covering multiple channels can be used in the splitters 30 and 60 to reduce system cost.

The head-end installation (or "host" installation) comprises one or more access point modems. (The terminology "AP"=Access Point, "STA"=Station, "CLI"=Client is used in IEEE 802.11a and h specifications, which is the basis for the ADOC system.)

The motivation for installing multiple AP modems is to allow simultaneous operation on different RF channels. Thus, the data rate of one RF channel, which is limited to 54Mbps gross/-30Mbps net data rate (IEEE802.11a, b, g), can be exceeded significantly.

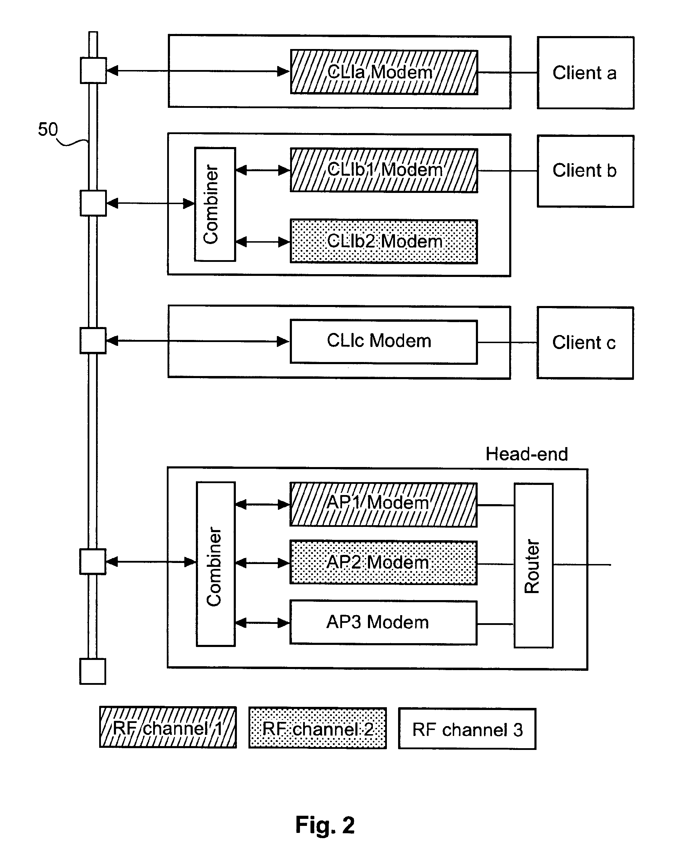

Fig. 2 illustrates different possibilities how the clients can be assigned to the access points. One "radio network" is defined by the RF channel frequency used and one access point coordinating it. Signals from and to the modems propagate through the coax cable network. The easiest assignment is that an access point is serving a single client only. In Fig. 2 access point AP3 is serving client c only and access point AP2 is serving the client b only. Access point AP1 is an example of serving two clients a and b. This is an example for providing client b with more than 30 Mbit/s net data rate. It is also an example for the typical case, that a number of clients share one common access point. The three modems in the access points AP1 to AP3 operate on different RF channels as indicated with different grey shadings. Of course, the client modems will use the respective RF channel frequencies as well, according to the AP each client is assigned to.

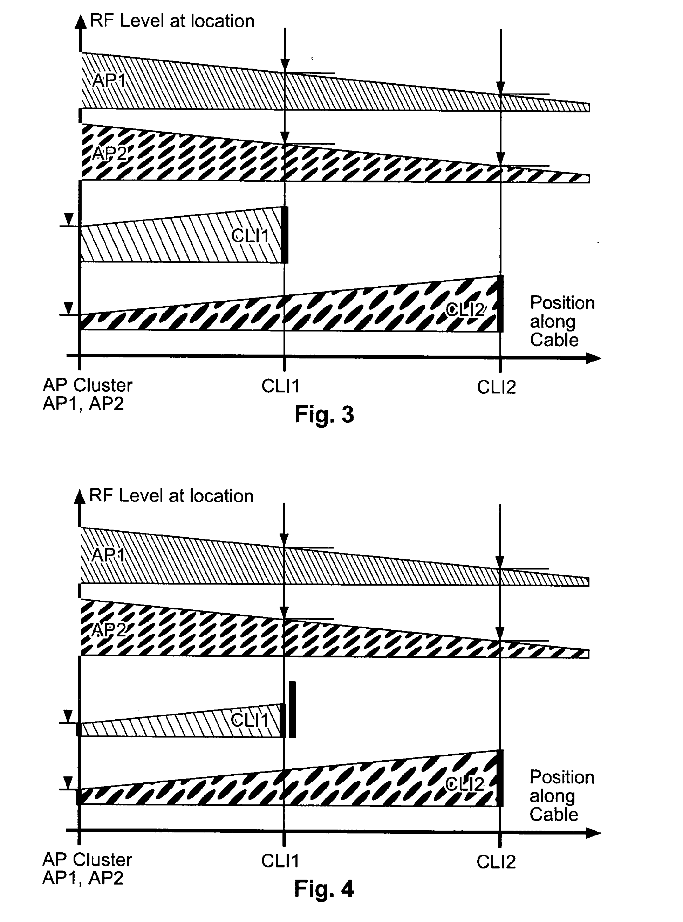

System constraints are that at a given point in time, each of the modems operates on a dedicated RF channel. Such an assignment could also be completely static, especially for the access points. This is illustrated in Fig. 3. The upper part of Fig. 3 shows how the signal power attenuates over the cable length. Typical values for the attenuation of the signals in TV cables are 30-40 dB for a distance of about 20 meters also including some taps, power splitters, etc. Two access points AP1 and AP2 are transmitting simultaneously in two different channels. For the downlink transmission direction shown in the upper part of the drawing both clients CLI1 and CLI2 at different distances "see" the same signal strength from the two access points AP1 and AP2. For the uplink transmissions in the lower part of the drawing the two clients CLI1 and CLI2 are sending with equal transmit power from different distances. The receive signal strengths at the access points AP1 and AP2 differ subjectively. It is a problem to evaluate the signal from CLI2 if the signal strength is becoming smaller and smaller relative to the CLI1 transmission with increasing distance between the two clients. Normally, the selectivity of the filters used in the splitter 30 in the head-end is not high enough to avoid interferences from the stronger signal in the neighboring channel. More accurate filters however are costly. The WLAN standard IEEE 802.11 specifies the minimum performance a modem needs to fulfill. See e.g. "IEEE 802.11a-1999", chapters "17.3.10.2 Adjacent Channel Rejection" and "17.3.10.3 Non-adjacent channel rejection".

The inventors expect that with 54 Mbit/s data rate, the immediate adjacent channel may only be up to 1dB below the desired one, to guarantee successful reception. With components of such minimum specification, a cable network will not work reliably. In the following the problem with different signal strengths will be called near-far problem.

Due to the near-far problems in the cable network, interferences between channels cannot be avoided, if one of the AP modems transmits and another one receives at the same time. This also holds for the CLI modems. A solution for this problem has been disclosed in the application CN200610140627.2. According to this solution a synchronized timing of RX and TX operations is enforced for all access point modems. It is considered that the same approach is used, here as well.

Fig. 4 now shows the situation when the transmit power control process according to the invention is used. Station CLI2 is transmitting with the same transmit power as in Fig. 2 but client CLI1 is sending with reduced signal strength because it has recognized that it is closer to the access point AP1 by measuring the reception signal strength during downlink transmission. Client CLI2 sends with the stronger signal because it has recognized that it is farther away to the access point AP1 by measuring the reception signal strength during downlink transmission. The result is that both access points see approximately the same signal strength at their inputs. Cross talk from the channel on which client CLI1 is transmitting is avoided.

Different embodiments of the transmit power control process will now be disclosed in detail.

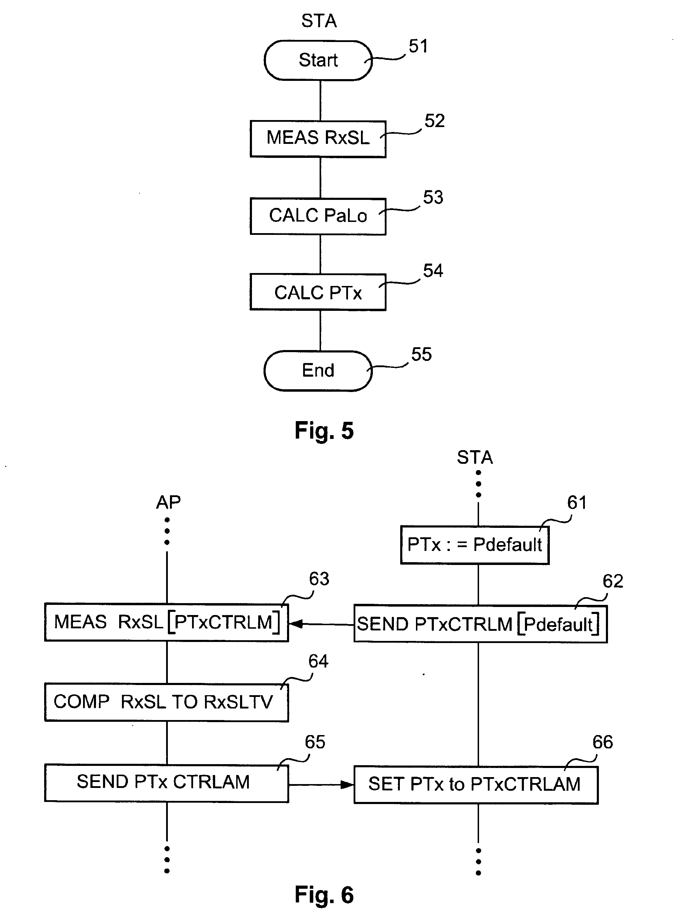

Figure 5 implies that a WLAN system is used in connection with the invention corresponding to the specification IEEE802.11a or IEEE802.11h. Those versions make use of the orthogonal frequency division multiplex (OFDM) technology which is relative insensitive to channel echoes. This is a multicarrier system where 48 carriers are used to carry the data words. The channel spacing is 20 MHz. Possible bitrates are from 6 to 54 Mbit/s.

The signals simultaneously transmitted by the access point modems should be received by the intended client modems. At each client the intended signal should be sufficiently high in level versus the non-intended one, i.e. the signals from the neighboring channels. The transmit power will also be controlled in all access point modems. The goal is that at each point of the cable network, the signals coming from the access point modems shall always be equal in level. The control therefore concerns the mechanism that all access point modems in the head-end shall transmit with the same signal level.

Figure 5 now shows the transmit power control process from the clients perspective. It shows the flow chart for the mechanism working in the clients. Reference no. 51 denotes the start of this mechanism. In step 52 the client measures the signal strength of the reception signal from the desired access point. This can be done by the corresponding evaluation of the automatic gain controller AGC setting of the receive signal path in the front end IC. In step 53 the calculation of the path loss for the transmission from the access point to the client is calculated. This calculation can be performed in the following manner. The presumption is that the transmit power level at which the access point has transmitted its signal is known to the clients. Different embodiments are possible. One embodiment relates to the possibility to use only a defined default value for the transmissions from the access points to the clients. This default value can be fixed in the hardware or firmware of the access points and will be communicated to the clients in a control frame. The IEEE802.11h standard defines control frames which are also called access point "beacon". This "beacon message" includes different types of control data for example it also carries the extended service set identifier ESSID. This information concerns a code to identify the network to which the data package belongs. Note that each client can only be part of a single network cluster managed by one assigned access point. If the transmit power value is not the default value, the actual transmitted signal power level is to be communicated to the client in the same manner via a control frame. Based on this information of the actual used transmit power level, the client will know what the path loss is by subtracting the measured signal strength of the received signals from the known transmit power value valid for the access point transmissions.

In step 54 the transmit power level for the transmission of the client will be calculated based on the path loss. This can be done in the following manner:

The transmit power value PTx,CLI for the transmission of the client is just the sum of the demanded signal strength PRx,AP for the reception at the access point plus the calculated path loss:

$$PTx,CLI = PRx,AP + Path\_Loss.$$

It is an option that each client will check its receive power level from the transmissions of access points at certain times or regularly with a certain period to make sure that its transmit power is correctly adjusted in accordance with the change of the attenuation between the access point and the client caused by physical network changes like when a client is added to the network or logged off from the network. Preferably the measuring of the characteristic of the actual signal reception from the access point is performed during reception of the "beacon". This is periodically sent and it can be periodically measured to determine an average value.

Of course, as mentioned before all the access points need to notify the clients about any changes in their transmit power setting. Also, if a different intended receive power value is chosen by the access point, then this shall be communicated to the clients in a corresponding control message as well.

Next embodiment of the transmit power control process according to the invention will be explained with the help of the Figure 6. At the left side of the drawing the processing steps from the access point are depicted and at the right side the processing steps in the client are listed. At the time of establishing a first link, the client will operate with the default transmit power level, possibly the maximum possible value. The default value is taken in step 61 and the first transmission with the default value is performed in step 62. Observations from the inventors reveal that sometimes it was observed that the RSSID indicator at the access point side did not exactly change by the same amount of NNdB when the client side has adjusted its transmit power level by NNdB. So for this it is recommended that the client also communicates it's actually taken transmit power value during the adjustment process so that the access point can make a better estimation of the optimum value for the next adjustment step. Therefore in step 62 the client also sends the actual set transmit power value in a control frame. With this improvement, the access point can be aware how far from any lower or higher technical power limit the client is operated. Based on this information it could for example agree with the other access points to jointly increase or decrease the intended receive signal level PRx,AP. Also this allows for recognizing whether the client has a defect or is malfunctioning.

Step 63 now shows that the access point is measuring signal strength of the signal coming from the client transmitted with the default set value. The measured signal level will be compared with the given target value defined in the access point. This is performed in the steps 64 in the access point. From this comparison the access point will derive a correction value for the transmissions of the client to the access point. A corresponding control frame will be transmitted to the client in step 65 with the instruction how to change the clients transmit power level for best reception conditions. The client receives this control message in step 66 and adjusts its transmit power level according to the instruction received from the access point. A typical instruction can be in the form of "increase/decrease transmit power level by NNdB".

The process steps depicted in Figure 6 could be repeatedly performed in an iteration manner with fine adjustments to get to the optimum values step by step. The precision of the process is very good at low cost. The RX level measurements in the clients are not used so that their precision has no impact on the process here. Since one access point performs a measurement of all clients associated there is also no need for absolute precision. The level measurement just needs to be reproducible. The level measurements of the different access points should match. This could be achieved by a calibration process of the access points in the head-end with no need for absolute value precision. A higher precision achieved with the transmit power control level will certainly reduce the packet error rates. This is equivalent to the possibility of making more efficient use of the spectrum. The adjacent channel interference is reduced and hence more channels can be put in the band. The use of the adjustment process in certain radio time intervals can cope with physical drifts or changes in the network. With tracking of the information inside the access point it is possible to usefully monitor the changes or identify failure cases, e. g. due to a miss-operation by the end user.

A third embodiment of the transmit power control process according to the invention is the combined use of the methods depicted in Figure 5 and Figure 6. At the time of establishing the link between the access point and a client the process according to the Figure 5 is applied. After an initial phase the process switches over to the fine process of Figure 6. A combined solution brings some advantages. In case there is a high level of dynamic in the network, a fixed choice of the initial transmit power level could be very wrong. In that situation there may be multiple frames required until the receiver in the access point modems is no more overloaded and has reached a useful receiver AGC setting. In case of a massive overload, the client would have to do more trials with other initial values of transmit power levels if the combined approach is not taken. The use of the transmit power control process in accordance with the embodiment depicted in Figure 5 for the initial choice will accelerate the adjustment process subjectively. For getting a higher precision a switch over to the embodiment according to Figure 6 improves the precision and achieves the best final performance. Once the adjustment process according to Figure 6 operates, the receive power measurements in the clients can be calibrated, which may be useful for the future. If all clients have once communicated with one same access point, the transmit power level of the different access points could be adjusted to equal level.

The system architecture described above in connection with Figures 1 and 2 is well suited for hardware modularity. Additional WLAN transceivers can be added to increase the data rate and stay in line with actual requirements. Such upgrade installations can be done without disturbing the operation of the whole system.

Another further embodiment of the invention will now be explained shortly. In the foregoing embodiments the transmission characteristic that has been adjusted in a transmit power control process was the transmit power of the RF signal. In the further embodiment it is proposed to adjust the modulation type and/or the error protection level for the transmitted signal instead or in addition to the transmission signal level.

As explained above, the WLAN technology that is used for the ADOC System relates to the OFDM technology. Different modulation types can be used in connection with the OFDM technology. Examples are binary phase shift keying (BPSK), quadrature phase shift keying (QPSK) and different sorts of quadrature amplitude modulation (QAM). Furthermore, the code rate which corresponds to the error protection level can be adjusted. Possible code rates for 16 QAM are for example 9/16 and 3/4 for the net bit rates 27 Mbit/s and 36 Mbit/s. In case of QPSK, the code rates 1/2 and 3/4 are also defined. Therefore, it is the idea of the invention to modify the code rate to improve the single conditions at the receiving end. For example, if the signal level at the access point is rather small due to a far distant transmission where the client already transmits with full power, but the single strength is not sufficient at the access point for a reliable data streaming, it is a possibility to switch over to a lower code rate with more error protection to decrease the bit error rate at the receiving end. Therefore, this adjustment can preferably made in addition to the adjustment of the signal level strength when no further adjustment possibility is available for the single level strength. Likewise, it would be an option to change to a more robust digital modulation type for achieving better reception conditions. For example, changing the modulation type from 64 QAM to 16 QAM would result in a lower bit error rate. Likewise, changing from 16 QAM to QPSK would do the same. In these cases, the receiver can tolerate stronger adjacent channel interference, due to relaxed needs on signal to noise ratio (SNR). Therefore, the transmission characteristic that is changed in the method according to the invention does not need to be the transmit power level respectively the signal strength, only. It can also be the digital modulation type and the code rate or some other parameter as well.

The invention is not restricted to the exemplary embodiment described here. There is scope for many different adaptations and developments which are also considered to belong to the invention. It is expressively pointed out that the two embodiments depicted in Fig. 5 and 6 are alternatives and can be used independently from each other. Also they can be used in combined manner as explained above.

One extension concerns the idea that a client CLI stores its last set transmit characteristic. When reconnecting, this last setting can then be used to start with. If the transmission is not successful, the method with the measuring of the actual reception signal depicted in Fig. 5 or the method as shown in Fig. 6 has to be used again.

One further embodiment of the invention is that the RF cable 50, e.g. coax cable is solely used for providing data channels.

## Claims

**1.** Method for the adjustment of a transmission characteristic for a data transfer between a first station (AP1, AP2) and a second station (CLI1, CLI2) over an RF cable (50), providing a number of data channels in one frequency band, **characterized in that** the first station (AP1, AP2) transmits at a first defined characteristic, known to the second station (CLI1, CLI2), wherein the second station (CLI1, CLI2) measures the actual characteristic of the data signal reception, calculates the path loss based on the first defined transmission characteristic and the actual measured characteristic and determines and uses an appropriate transmission characteristic for its own transmissions back to the first station (AP1, AP2) based on the calculated path loss.

**2.** Method according to claim 1, wherein the first station (AP1, AP2) is an access point to a network and the second station (CLI1, CLI2) is a client in the network of which the access point manages the medium access.

**3.** Method according to claim 1 or 2, wherein the transmission characteristic is one of or a combination of the transmit power level, the modulation type and the level of error protection for the data transfer.

**4.** Method according to claim 2 or 3, wherein the second station measures the actual characteristic of the data signal reception preferably during the reception of a control frame from an access point, in particular the so-called beacon of a wireless LAN transmission.

**5.** Method according to one of the previous claims, wherein the first station (AP1, AP2) measures the actual characteristic of the data signal reception, compares this with a given target value and transmits back to the second station (CLI1, CLI2) a control message indicating how to change the second stations transmission characteristic for a more reliable data transfer.

**6.** Method according to claim 5, wherein the second station (CLI1, CLI2) adjusts the transmission characteristic for its data transfers upon reception of the control message.

**7.** Method according to one of claims 1 to 6, wherein the second station (CLI1, CLI2) communicates the actually adjusted transmission characteristic value back to the first station (AP1, AP2) in a feedback message.

**8.** Method according to one of claims 1 to 7, wherein the second station (CLI1, CLI2) records the actually used transmission characteristic value and uses the recorded transmission characteristic value in a first attempt when reconnecting to the network.

**9.** Method according to one of claims 1 to 8, wherein the RF cable (50) provides a plurality of TV channels in another frequency band different from the frequency band for the data channels.

**10.** Network station for the use in a method according to one of claims 1 to 9, having means for sending and receiving data signals over an RF cable (50), **characterized by** a measurement unit for measuring a characteristic of the data signal reception from the first station (AP1, AP2), a unit for calculating the path loss based on the first defined transmission characteristic and the measured characteristic and for determining and using an appropriate adjusted characteristic for its own transmissions back to the first station (AP1, AP2).

**11.** Network station according to claim 10, wherein the measurement unit is adapted to measure the characteristic of the data signal reception during the reception of a control frame from an access point, in particular the so-called beacon of a wireless LAN transmission.

**12.** Network station according to claim 10 or 11, comprising means for adjusting the transmission characteristic for its own transmissions according to an instruction in a control message received from the first network station (AP1, AP2).

**13.** Network station according to one of claims 10 to 12, further comprising means for generating and sending back a feedback message to the first client (AP1, AP2) with the information about the actually used transmission characteristic after adjustment.

**14.** Network station according to one of claims 10 to 13, further comprising means for recording the actually used transmission characteristic after adjustment for a future reuse when reconnecting.

**15.** Network station for the use in a method according to one of claims 1 to 9, having means for sending and receiving data signals over an RF cable (50), **characterized in that** the network station (AP1, AP2) comprises a measuring unit for measuring a signal characteristic of the data signal reception from the second station (CLI1, CLI2), means for comparing said measured signal characteristic with a given target value and for transmitting back to the second station (CLI1, CLI2) a control message indicating how to change the second client's transmission characteristic for a more reliable data transfer.

**16.** Network station according to claim 15, wherein the station (AP1, AP2) is part of a head-end (10) for a cable network namely an access point for a wireless LAN network, wherein the wireless LAN signal is frequency converted into a different frequency band for the transfer over the RF cable (50).

**Fig. 1**

**Fig. 2**

Fig. 3

Fig. 4

STA

Start 51

MEAS RxSL 52

CALC PaLo 53

CALC PTx 54

End 55

**Fig. 5**

STA

AP

PTx : = Pdefault 61

MEAS RxSL [PTxCTRLM] 63 ← SEND PTxCTRLM [Pdefault] 62

COMP RxSL TO RxSLTV 64

SEND PTx CTRLAM 65 → SET PTx to PTxCTRLAM 66

**Fig. 6**

Europäisches
Patentamt

European
Patent Office

Office européen
des brevets

# EUROPEAN SEARCH REPORT

**Application Number**

EP 08 30 5482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 02/091623 A (KONINKL PHILIPS ELECTRONICS NV [NL]) 14 November 2002 (2002-11-14) * abstract *<br><br>* page 1, line 19 - page 3, line 17 * * page 6, line 17 - line 27; claims 1-6; figures 1-10 *<br>----- | 1-4,7,8, 10,11, 13-15<br>5,6,9, 12,16 | INV. H04L12/28 H04L1/00 |
| X | US 2007/072555 A1 (REESE DAVID L [US] ET AL) 29 March 2007 (2007-03-29) * abstract * * paragraph [0006] - paragraph [0013]; claims 1-4; figures 1-5 *<br>----- | 1-3,10, 15 | |
| X | WO 2008/086670 A (HANGZHOU H3C TECHNOLOGIES CO L [CN]; YU YANG [CN]) 24 July 2008 (2008-07-24) * abstract *<br>----- | 1-3,10, 15 | |
| Y | WO 01/76142 A (COAXMEDIA INC [US]) 11 October 2001 (2001-10-11) * abstract; claims 1-8 *<br>----- | 5,6,12 | TECHNICAL FIELDS SEARCHED (IPC)<br><br>H04L H04W |
| Y | WO 2008/031856 A (THOMSON LICENSING [FR]; YU YINFEI [CN]; ZHANG JUNBIAO [CN]; ZHANG ZHIG) 20 March 2008 (2008-03-20) * abstract * * page 4, line 1 - page 5, line 6 *<br>----- | 9,16 | |
| A | US 2003/125066 A1 (HABETHA JOERG [DE]) 3 July 2003 (2003-07-03) * the whole document *<br>----- | 3 | |
| A | WO 2006/043242 A (KONINKL PHILIPS ELECTRONICS NV [NL]; PHILIPS CORP [US]; HABETHA JOERG) 27 April 2006 (2006-04-27) * the whole document *<br>----- | 4 | |

The present search report has been drawn up for all claims

| Place of search | Date of completion of the search | Examiner |
|---|---|---|
| Munich | 15 January 2009 | Jimenez Hernandez, P |

EPO FORM 1503 03.82 (P04C01)

## ANNEX TO THE EUROPEAN SEARCH REPORT
## ON EUROPEAN PATENT APPLICATION NO.

EP 08 30 5482

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2009

| Patent document cited in search report | | Publication date | Patent family member(s) | | Publication date |
|---|---|---|---|---|---|
| WO 02091623 | A | 14-11-2002 | CN | 1462515 A | 17-12-2003 |
| | | | EP | 1393465 A1 | 03-03-2004 |
| | | | JP | 2004533762 T | 04-11-2004 |
| | | | US | 2002168993 A1 | 14-11-2002 |
| US 2007072555 | A1 | 29-03-2007 | NONE | | |
| WO 2008086670 | A | 24-07-2008 | CN | 101227295 A | 23-07-2008 |
| WO 0176142 | A | 11-10-2001 | AU | 8929801 A | 15-10-2001 |
| | | | CN | 1422472 A | 04-06-2003 |
| | | | EP | 1277308 A1 | 22-01-2003 |
| | | | JP | 2003530015 T | 07-10-2003 |
| | | | MX | PA02009457 A | 14-10-2003 |
| WO 2008031856 | A | 20-03-2008 | CN | 101146071 A | 19-03-2008 |
| US 2003125066 | A1 | 03-07-2003 | CN | 1461541 A | 10-12-2003 |
| | | | DE | 10107850 A1 | 05-09-2002 |
| | | | EP | 1362450 A1 | 19-11-2003 |
| | | | WO | 02067492 A1 | 29-08-2002 |
| | | | JP | 2004519894 T | 02-07-2004 |
| WO 2006043242 | A | 27-04-2006 | AU | 2005297231 A1 | 27-04-2006 |
| | | | BR | PI0517087 A | 30-09-2008 |
| | | | CA | 2584394 A1 | 27-04-2006 |
| | | | EP | 1805908 A1 | 11-07-2007 |
| | | | JP | 2008517550 T | 22-05-2008 |
| | | | KR | 20070083700 A | 24-08-2007 |
| | | | US | 2008137577 A1 | 12-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200610140627